# EUROPÄISCHE PATENTANMELDUNG

(11) **EP 4 684 935 A1**
(43) Veröffentlichungstag der Anmeldung: **28.01.2026**
(21) Anmeldenummer: 24190324.4
(22) Anmeldetag: 23.07.2024
(51) Int. Cl.: B29B 7/74, B29B 7/84, B29C 48/76, B29C 48/92, B29B 7/88, B29C 48/40, B29K 7/00, B29K 9/00

(54) **VERFAHREN UND AUFBEREITUNGSANLAGE ZUR AUFBEREITUNG VON STYROL-ACRYLNITRIL**

(71) Anmelder: Coperion GmbH, 70469 Stuttgart (DE)
(72) Erfinder: Lechner, Frank, 71636 Ludwigsburg (DE); Beiser, Oliver, 70599 Stuttgart (DE)
(74) Vertreter: Rau, Schneck & Hübner Patentanwälte Rechtsanwälte PartGmbB

(57) **Zusammenfassung**

Eine Aufbereitungsanlage (1) umfasst eine Aufbereitungsschneckenmaschine (4) zum Aufbereiten von entwässertem Kautschuk (7) und von Styrol-Acrylnitril, eine Entwässerungsschneckenmaschine (2) zum Entwässern von nassem Kautschuk (6) und zum Bereitstellen des entwässerten Kautschuks (7) und eine Zuführeinrichtung (3) zum Zuführen des entwässerten Kautschuks (7) in die Aufbereitungsschneckenmaschine (4). Dadurch, dass das Entwässern und das Aufbereiten maschinentechnisch entkoppelt sind, ist eine einfache, flexible und effiziente Aufbereitung erzielbar.

## Beschreibung

Die Erfindung betrifft ein Verfahren und eine Aufbereitungsanlage zur Aufbereitung von Styrol-Acrylnitril.

Aus der WO 2022/229 347 A1 ist ein Verfahren und eine Aufbereitungsanlage zur Aufbereitung von Styrol-Acrylnitril (SAN) bekannt. Die Aufbereitungsanlage umfasst einen Extruder, der in einer Förderrichtung nacheinander eine erste Einzugszone, eine Vorheizzone, eine mechanische Entwässerungszone, eine zweite Einzugszone, eine erste Entgasungszone, eine dritte Einzugszone, eine zweite Entgasungszone und eine Austragszone ausbildet. In der ersten Einzugszone werden Acrylnitril-Butadien-Styrol (ABS) und ggf. Additive in den Extruder zugeführt, die in der Vorheizzone aufgeheizt und anschließend in der Entwässerungszone entwässert werden. In der zweiten Einzugszone wird Styrol-Acrylnitril in den Extruder zugeführt. Die in dem Extruder anschließend erzeugte Mischung wird in den Entgasungszonen entgast. In der dritten Einzugszone können nochmals Styrol-Acrylnitril und Additive in den Extruder zugeführt werden. Die entgaste Mischung wird in der Austragszone aus dem Extruder ausgetragen.

Der Erfindung liegt die Aufgabe zugrunde, ein Verfahren zu schaffen, das eine einfache, flexible und effiziente Aufbereitung von Styrol-Acrylnitril ermöglicht.

Diese Aufgabe wird durch ein Verfahren mit den Merkmalen des Anspruchs 1 gelöst. Erfindungsgemäß sind die Entwässerung des Kautschuks, insbesondere des Acrylnitril-Butadien-Styrols (ABS), und das Aufbereiten des Styrol-Acrylnitrils (SAN) maschinentechnisch voneinander entkoppelt.

Die Aufbereitungsanlage umfasst eine Entwässerungsschneckenmaschine und mindestens eine separate Aufbereitungsschneckenmaschine. Die Entwässerungsschneckenmaschine dient zum Entwässern von nassem Kautschuk, wohingegen die mindestens eine Aufbereitungsschneckenmaschine zum Erzeugen einer Mischung aus dem entwässerten Kautschuk und dem Styrol-Acrylnitril und zum Entgasen der erzeugten Mischung dient. Dadurch, dass die Verfahrensschritte des Entwässerns und des Aufbereitens, also des Erzeugens der Mischung und des Entgasens der erzeugten Mischung, maschinentechnisch auf die Entwässerungsschneckenmaschine und die mindestens eine Aufbereitungsschneckenmaschine aufgeteilt sind, können diese Verfahrensschritte einfach, flexibel und effizient durchgeführt werden. Insbesondere kann die Entwässerungsschneckenmaschine für den Verfahrensschritt des Entwässerns optimal konfiguriert und betrieben werden, wohingegen die mindestens eine Aufbereitungsschneckenmaschine für den Verfahrensschritt des Aufbereitens konfiguriert und betrieben werden kann.

Als Kautschuk kann Naturkautschuk und/oder Synthesekautschuk eingesetzt werden. Als Synthesekautschuk kann beispielsweise Acrylnitril-Butadien-Styrol (ABS) eingesetzt werden.

Die Entwässerungsschneckenmaschine umfasst mindestens eine Entwässerungswelle, vorzugsweise mindestens zwei Entwässerungswellen. Die mindestens eine Entwässerungswelle rotiert im Betrieb der Entwässerungsschneckenmaschine mit einer Drehzahl n_{E}. Für die Drehzahl n_{E} gilt insbesondere: 40 rpm ≤ n_{E} ≤ 600 rpm, insbesondere 50 rpm ≤ n_{E} ≤ 400 rpm, und insbesondere 60 rpm ≤ n_{E} ≤ 300 rpm.

Die Entwässerungsschneckenmaschine kann als Einwellen-Entwässerungsschneckenmaschine oder als Mehrwellen-Entwässerungsschneckenmaschine ausgebildet sein. Vorzugsweise ist die Entwässerungsschneckenmaschine als gleichläufige Zweiwellen-Entwässerungsschneckenmaschine ausgebildet, die zwei Entwässerungswellen umfasst. Die Entwässerungswellen sind gleichsinnig drehantreibbar bzw. drehangetrieben.

Der nasse Kautschuk hat beim Zuführen in die Entwässerungsschneckenmaschine den ersten Wassergehalt W₁, wohingegen der entwässerte Kautschuk beim Austragen aus der Entwässerungsschneckenmaschine den zweiten Wassergehalt W₂ hat. Für eine relative Wassergehaltänderung ΔW = (W₁ - W₂)/W₁ gilt insbesondere: 50 % ≤ ΔW ≤ 99 %, insbesondere 60 % ≤ ΔW ≤ 95 %, und insbesondere 70 % ≤ ΔW ≤ 90 %.

Der entwässerte Kautschuk wird nach dem Austragen aus der Entwässerungsschneckenmaschine in die mindestens eine Aufbereitungsschneckenmaschine zugeführt. Der entwässerte Kautschuk kann einer Aufbereitungsschneckenmaschine oder mehreren Aufbereitungsschneckenmaschinen zugeführt werden. Mehrere Aufbereitungsschneckenmaschinen sind parallel zueinander angeordnet, so dass der entwässerte Kautschuk auf die mehreren Aufbereitungsschneckenmaschinen aufgeteilt werden kann. Die Aufbereitungsanlage umfasst eine erste Zuführeinrichtung zum Zuführen des entwässerten Kautschuks in die mindestens eine Aufbereitungsschneckenmaschine.

Die mindestens eine Aufbereitungsschneckenmaschine, insbesondere die jeweilige Aufbereitungsschneckenmaschine, ist vorzugsweise als Mehrwellen-Aufbereitungsschneckenmaschine ausgebildet. Die mindestens eine Aufbereitungsschneckenmaschine hat jeweils insbesondere mindestens zwei Behandlungselementwellen. Die mindestens zwei Behandlungselementwellen sind insbesondere gleichsinnig drehantreibbar bzw. drehangetrieben. Vorzugsweise ist die mindestens eine Aufbereitungsschneckenmaschine, insbesondere die jeweilige Aufbereitungsschneckenmaschine, als gleichläufige Zweiwellen-Aufbereitungsschneckenmaschine ausgebildet. Die jeweilige Aufbereitungsschneckenmaschine umfasst somit genau zwei Behandlungselementwellen, die gleichsinnig drehantreibbar bzw. gleichsinnig drehangetrieben sind.

Die mindestens zwei Behandlungselementwellen haben im Betrieb eine Drehzahl n_{A}. Für die jeweilige Drehzahl n_{A} gilt insbesondere:
40 rpm ≤ n_{A} ≤ 1200 rpm, insbesondere 100 rpm ≤ n_{A} ≤ 1000 rpm, und insbesondere 200 rpm ≤ n_{A} ≤ 800 rpm.

Das Styrol-Acrylnitril kann als Schüttgut und/oder als Schmelze in die mindestens eine Aufbereitungsschneckenmaschine zugeführt werden. Vorzugsweise wird mindestens ein Additiv in die mindestens eine Aufbereitungsschneckenmaschine zugeführt und mit dem entwässerten Kautschuk und dem Styrol-Acrylnitril zu der Mischung vermischt.

Zum Zuführen des Styrol-Acrylnitrils in die mindestens eine Aufbereitungsschneckenmaschine kann die Aufbereitungsanlage eine jeweilige zweite Zuführeinrichtung umfassen. Die jeweilige zweite Zuführeinrichtung kann insbesondere einen Dosierer und/oder eine Zuführschneckenmaschine umfassen.

Ein Verfahren nach Anspruch 2 gewährleistet eine einfache, flexible und effiziente Aufbereitung von Styrol-Acrylnitril. Dadurch, dass die Entwässerungsschneckenmaschine auf den Verfahrensschritt des Entwässerns optimiert ist, kann der nasse Kautschuk auch bei einem hohen ersten Wassergehalt W₁ bis zu einem gewünschten zweiten Wassergehalt W₂ entwässert werden.

Ein Verfahren nach Anspruch 3 gewährleistet eine einfache, flexible und effiziente Aufbereitung von Styrol-Acrylnitril. Dadurch, dass die Entwässerungsschneckenmaschine auf den Verfahrensschritt des Entwässerns optimiert ist, kann ein geringer zweiter Wassergehalt W₂ des entwässerten Kautschuks erzielt werden. Vorzugsweise beträgt der zweite Wassergehalt W₂ höchstens 12 Gew.-%, insbesondere höchstens 6 Gew.-%, insbesondere höchstens 5 Gew.-% und insbesondere höchstens 2 Gew.-%. Je geringer der zweite Wassergehalt W₂ ist, desto einfacher ist das Entgasen der erzeugten Mischung mittels der mindestens einen Aufbereitungsschneckenmaschine.

Ein Verfahren nach Anspruch 4 gewährleistet eine einfache, flexible und effiziente Aufbereitung von Styrol-Acrylnitril. Durch die Temperatur T_{K} wird die thermische Energie des entwässerten Kautschuks zur Aufbereitung des Styrol-Acrylnitrils genutzt. Mittels der thermischen Energie wird die Viskosität des Styrol-Acrylnitrils positiv beeinflusst, wodurch eine verbesserte Vermischung und Homogenisierung des Styrol-Acrylnitrils mit dem entwässerten Kautschuk erzielt werden. Wird das Styrol-Acrylnitril als Schüttgut, beispielsweise als Pulver und/oder Granulat, zugeführt, so kann das Styrol-Acrylnitril mittels der thermischen Energie einfacher und schneller in der mindestens einen Aufbereitungsschneckenmaschine plastifiziert werden. Wird das Styrol-Acrylnitril als Schmelze zugeführt, so wird die Viskosität der Styrol-Acrylnitril-Schmelze zumindest nicht beeinträchtigt. Die Temperatur T_{K} gewährleistet somit eine einfache und effiziente Vermischung und Homogenisierung des entwässerten Kautschuks und des Styrol-Acrylnitrils.

Ein Verfahren nach Anspruch 5 gewährleistet eine einfache, flexible und effiziente Aufbereitung von Styrol-Acrylnitril. Durch die Zuführung des entwässerten Kautschuks in die mindestens eine Aufbereitungsschneckenmaschine stromaufwärts zu der Zuführung des Styrol-Acrylnitrils wird eine verbesserte Homogenisierung des entwässerten Kautschuks und des Styrol-Acrylnitrils erzielt. Wird das Styrol-Acrylnitril als Schüttgut, beispielsweise als Pulver und/oder Granulat, zugeführt, werden das Styrol-Acrylnitril und der entwässerte Kautschuk gemeinsam in der mindestens einen Aufbereitungsschneckenmaschine plastifiziert bzw. mastiziert und in einfacher und effizienter Weise homogenisiert. Wird das Styrol-Acrylnitril als Schmelze zugeführt, so wird der entwässerte Kautschuk in der Styrol-Acrylnitril-Schmelze mastiziert und gleichzeitig homogenisiert.

Ein Verfahren nach Anspruch 6 gewährleistet eine einfache, flexible und effiziente Aufbereitung von Styrol-Acrylnitril. Durch das Zuführen des Styrol-Acrylnitrils als Schüttgut, beispielsweise als Pulver und/oder Granulat, werden das Styrol-Acrylnitril und der entwässerte Kautschuk in der mindestens einen Aufbereitungsschneckenmaschine gemeinsam plastifiziert bzw. mastiziert und hierbei homogenisiert. Wird das Styrol-Acrylnitril als Schmelze zugeführt, so wird der entwässerte Kautschuk unmittelbar in der Styrol-Acrylnitril-Schmelze mastiziert und gleichzeitig homogenisiert. Hierdurch wird das Aufbereiten des Styrol-Acrylnitrils verbessert.

Ein Verfahren nach Anspruch 7 gewährleistet eine einfache, flexible und effiziente Aufbereitung von Styrol-Acrylnitril. Die jeweilige Dichtung ist insbesondere eine Schmelzedichtung. Durch die jeweilige Dichtung in der mindestens einen Aufbereitungsschneckenmaschine wird verhindert, dass bei dem Aufbereiten aus der Mischung austretende Feuchtigkeit bzw. entstehender Wasserdampf entgegen der Förderrichtung in der mindestens einen Aufbereitungsschneckenmaschine zurückströmen kann. Durch das Verhindern des Zurückströmens wird wiederum verhindert, dass die Zuführung des entwässerten Kautschuks oder des Styrol-Acrylnitrils beeinträchtigt wird. Vorzugsweise ist die erste Zuführstelle des entwässerten Kautschuks in der Förderrichtung stromaufwärts zu der zweiten Zuführstelle des Styrol-Acrylnitrils angeordnet. Das Styrol-Acrylnitril wird als Schmelze und/oder als Schüttgut in die mindestens eine Aufbereitungsschneckenmaschine zugeführt. Das Schüttgut wird in der mindestens einen Aufbereitungsschneckenmaschine zu einer Schmelze plastifiziert. Aufgrund der Temperatur der Styrol-Acrylnitril-Schmelze tritt restliche Feuchtigkeit, die noch in dem entwässerten Kautschuk enthalten ist, als Wasserdampf aus. Durch die jeweilige Dichtung wird verhindert, dass dieser Wasserdampf entgegen der Förderrichtung in der mindestens einen Aufbereitungsschneckenmaschine zurückströmt und insbesondere die Zuführung des entwässerten Kautschuks beeinträchtigt.

Der Erfindung liegt ferner die Aufgabe zugrunde, eine Aufbereitungsanlage zu schaffen, die eine einfache, flexible und effiziente Aufbereitung von Styrol-Acrylnitril ermöglicht.

Diese Aufgabe wird durch eine Aufbereitungsanlage mit den Merkmalen des Anspruchs 8 gelöst. Die Vorteile der erfindungsgemäßen Aufbereitungsanlage entsprechen den bereits beschriebenen Vorteilen des erfindungsgemäßen Verfahrens. Insbesondere kann das erfindungsgemäße Verfahren mit mindestens einem Merkmal weitergebildet werden, das im Zusammenhang mit der erfindungsgemäßen Aufbereitungsanlage beschrieben ist.

Dadurch, dass die Aufbereitungsanlage eine Entwässerungsschneckenmaschine und mindestens eine Aufbereitungsschneckenmaschine umfasst, ist das Entwässern des nassen Kautschuks und das Aufbereiten des entwässerten Kautschuks und des Styrol-Acrylnitrils maschinentechnisch voneinander entkoppelt bzw. separiert. Die Entwässerungsschneckenmaschine kann zum Entwässern des nassen Kautschuks konfiguriert werden, wohingegen die mindestens eine Aufbereitungsschneckenmaschine, insbesondere die jeweilige Aufbereitungsschneckenmaschine, zum Aufbereiten des entwässerten Kautschuks und des Styrol-Acrylnitrils konfiguriert werden kann. Hierdurch wird die Aufbereitung von Styrol-Acrylnitril verbessert. Insbesondere wird eine einfache, flexible und effiziente Aufbereitung erzielt.

Vorzugsweise umfasst die Entwässerungsschneckenmaschine ein Gehäuse und mindestens eine Entwässerungswelle, die in einer zugehörigen Gehäusebohrung des Gehäuses angeordnet ist. Die mindestens eine Entwässerungswelle ist insbesondere zweigängig ausgebildet. Vorzugsweise umfasst die Entwässerungsschneckenmaschine mindestens zwei Entwässerungswellen, vorzugsweise genau zwei Entwässerungswellen, die in zugehörigen Gehäusebohrungen des Gehäuses angeordnet sind. Die zwei Gehäusebohrungen durchdringen einander und haben im Querschnitt die Form einer liegenden Acht. Vorzugsweise ist die Entwässerungsschneckenmaschine als gleichläufige Mehrwellen-Entwässerungsschneckenmaschine ausgebildet.

Vorzugsweise umfasst die jeweilige Aufbereitungsschneckenmaschine ein Gehäuse und mindestens zwei Behandlungselementwellen, die in zugehörigen Gehäusebohrungen des Gehäuses angeordnet sind. Die mindestens zwei Behandlungselementwellen sind insbesondere zweigängig ausgebildet. Die jeweilige Aufbereitungsschneckenmaschine umfasst vorzugsweise genau zwei Behandlungselementwellen, die in zugehörigen Gehäusebohrungen des Gehäuses angeordnet sind. Die zwei Gehäusebohrungen durchdringen einander und haben im Querschnitt die Form einer liegenden Acht. Vorzugsweise ist die jeweilige Aufbereitungsschneckenmaschine als gleichläufige Mehrwellen-Aufbereitungsschneckenmaschine, insbesondere Zweiwellen-Aufbereitungsschneckenmaschine, ausgebildet.

Die mindestens eine Aufbereitungsschneckenmaschine, insbesondere die jeweilige Aufbereitungsschneckenmaschine, umfasst mindestens eine Zuführöffnung zum Zuführen des entwässerten Kautschuks und des Styrol-Acrylnitrils. Vorzugsweise umfasst die mindestens eine Aufbereitungsschneckenmaschine jeweils eine erste Zuführöffnung zum Zuführen des entwässerten Kautschuks und eine zweite Zuführöffnung zum Zuführen des Styrol-Acrylnitrils. Vorzugsweise ist die erste Zuführöffnung in einer Förderrichtung der jeweiligen Aufbereitungsschneckenmaschine stromaufwärts zu der zweiten Zuführöffnung angeordnet.

Die Zuführeinrichtung dient zum Zuführen des entwässerten Kautschuks in die mindestens eine Aufbereitungsschneckenmaschine. Hierzu mündet die Entwässerungsschneckenmaschine in die Zuführeinrichtung, so dass der Zuführeinrichtung der entwässerte Kautschuk bereitgestellt wird. Die Zuführeinrichtung mündet wiederum in die mindestens eine Aufbereitungsschneckenmaschine, insbesondere in die erste Zuführöffnung der jeweiligen Aufbereitungsschneckenmaschine.

Vorzugsweise umfasst die Aufbereitungsanlage eine erste Zuführeinrichtung zum Zuführen des entwässerten Kautschuks in die mindestens eine Aufbereitungsschneckenmaschine und mindestens eine zweite Zuführeinrichtung zum Zuführen des Styrol-Acrylnitrils in die mindestens eine Aufbereitungsschneckenmaschine. Weist die Aufbereitungsanlage mehrere Aufbereitungsschneckenmaschinen auf, so kann das Styrol-Acrylnitril mittels einer gemeinsamen zweiten Zuführeinrichtung oder mittels einer jeweiligen zweiten Zuführeinrichtung in die Aufbereitungsschneckenmaschinen zugeführt werden. Vorzugsweise mündet die erste Zuführeinrichtung in die jeweilige erste Zuführöffnung und die mindestens eine zweite Zuführeinrichtung in mindestens eine zugehörige zweite Zuführöffnung.

Eine Aufbereitungsanlage nach Anspruch 9 gewährleistet eine einfache, flexible und effiziente Aufbereitung von Styrol-Acrylnitril. Durch das Verhältnis L_{E}/D_{E} gewährleistet die Entwässerungsschneckenmaschine eine einfache und effiziente Entwässerung des nassen Kautschuks. Je größer das Verhältnis L_{E}/D_{E} ist, desto größer ist eine Länge mindestens einer Entwässerungszone der Entwässerungsschneckenmaschine. Hierdurch kann der gewünschte Grad der Entwässerung des nassen Kautschuks eingestellt werden.

Eine Aufbereitungsanlage nach Anspruch 10 gewährleistet eine einfache, flexible und effiziente Aufbereitung von Styrol-Acrylnitril. Die mindestens eine Entwässerungswelle ist in einer zugehörigen Gehäusebohrung eines Gehäuses der Entwässerungsschneckenmaschine angeordnet. Durch das Verhältnis D_{E}/d_{E} kann ein freies Volumen bzw. eine freie Querschnittsfläche innerhalb der mindestens einen Gehäusebohrung eingestellt werden, wodurch ein Kneten des nassen Kautschuks und ein Abquetschen von Wasser aus dem nassen Kautschuk eingestellt werden kann. Darüber hinaus kann durch das Verhältnis D_{E}/d_{E} der mechanische Energieeintrag in den nassen Kautschuk begrenzt werden. Vorzugsweise gilt das Verhältnis D_{E}/d_{E} für mindestens eine Entwässerungszone, insbesondere für jede Entwässerungszone, die in der Entwässerungsschneckenmaschine ausgebildet ist.

Eine Aufbereitungsanlage nach Anspruch 11 gewährleistet eine einfache, flexible und effiziente Aufbereitung von Styrol-Acrylnitril. Vorzugsweise umfasst die Entwässerungsschneckenmaschine mehrere Entwässerungszonen, die in einer Förderrichtung nacheinander angeordnet sind. Vorzugsweise umfasst die Entwässerungsschneckenmaschine ein Gehäuse und mindestens eine Entwässerungswelle, die in einer zugehörigen Gehäusebohrung des Gehäuses angeordnet ist. Die jeweilige Entwässerungswelle umfasst vorzugsweise in jeder Entwässerungszone mindestens ein Knetelement und/oder mindestens ein Rückstauelement. Vorzugsweise umfasst die jeweilige Entwässerungswelle in jeder Entwässerungszone mindestens ein Knetelement und mindestens ein Rückstauelement, das in einer Förderrichtung stromabwärts zu dem mindestens einen Knetelement angeordnet ist. Das mindestens eine Rückstauelement gewährleistet, dass der nasse Kautschuk für eine gewünschte Verweildauer im Bereich des mindestens einen Knetelements verbleibt und somit mittels des mindestens einen Knetelements intensiv durchmischt und geknetet wird. Hierdurch wird Wasser aus dem nassen Kautschuk abgequetscht. Jeder Entwässerungszone ist vorzugsweise mindestens eine Entwässerungsöffnung zugeordnet, die in dem Gehäuse ausgebildet ist. Mindestens eine Entwässerungsöffnung ist vorzugsweise stromaufwärts zu dem mindestens einen Rückstauelement der Entwässerungszone angeordnet. Zum Abführen des abgequetschten Wassers kann an die jeweilige Entwässerungsöffnung ein Filtereinsatz und/oder eine Abführschneckenmaschine angeschlossen sein. Die jeweilige Abführschneckenmaschine kann beispielsweise als Zweiwellen-Abführschneckenmaschine ausgebildet sein. Die jeweilige Zweiwellen-Abführschneckenmaschine kann gleichsinnig oder gegensinnig rotierend ausgebildet sein.

Eine Aufbereitungsanlage nach Anspruch 12 gewährleistet eine einfache, flexible und effiziente Aufbereitung von Styrol-Acrylnitril. Die Zuführeinrichtung ermöglicht ein direktes Zuführen des entwässerten Kautschuks von der Entwässerungsschneckenmaschine in die mindestens eine Aufbereitungsschneckenmaschine. Hierzu ist eine Austragsöffnung der Entwässerungsschneckenmaschine mittels der Zuführeinrichtung mit einer jeweiligen Zuführöffnung der mindestens einen Aufbereitungsschneckenmaschine verbunden. Die Entwässerungsschneckenmaschine kann beispielsweise mittels mindestens einer Zuführrohrleitung und/oder mittels mindestens einen Zuführtrichters direkt mit der mindestens einen Aufbereitungsschneckenmaschine verbunden sein. Zur Zwischenspeicherung bzw. Pufferung des entwässerten Kautschuks unmittelbar vor dem Zuführen in die mindestens eine Aufbereitungsschneckenmaschine kann ein Pufferbehälter vorgesehen sein. Der entwässerte Kautschuk kann mittels eines jeweiligen Dosierers und/oder einer jeweiligen Zuführschneckenmaschine dosiert in die mindestens eine Aufbereitungsschneckenmaschine zugeführt werden.

Eine Aufbereitungsanlage nach Anspruch 13 gewährleistet eine einfache, flexible und effiziente Aufbereitung von Styrol-Acrylnitril. Das Verhältnis L_{A}/D_{A} ermöglicht eine gewünschte Homogenisierung des entwässerten Kautschuks und des Styrol-Acrylnitrils sowie ein wirkungsvolles Entgasen der erzeugten Mischung. Je kleiner das Verhältnis L_{A} / D_{A} ist, desto geringer ist der maschinentechnische Aufwand.

Eine Aufbereitungsanlage nach Anspruch 14 gewährleistet eine einfache, flexible und effiziente Aufbereitung von Styrol-Acrylnitril. Die jeweilige Aufbereitungsschneckenmaschine umfasst ein Gehäuse und mindestens zwei Behandlungselementwellen, die in zugehörigen Gehäusebohrungen des Gehäuses angeordnet sind. Durch das Verhältnis D_{A}/d_{A} kann ein freies Volumen bzw. eine freie Querschnittsfläche in den mindestens zwei Gehäusebohrungen eingestellt werden. Durch das freie Volumen bzw. die freie Querschnittsfläche kann eine intensive Durchmischung und Homogenisierung des entwässerten Kautschuks und des Styrol-Acrylnitrils erzielt werden. Zudem kann durch das freie Volumen bzw. die freie Querschnittsfläche der mechanische Energieeintrag und die auftretenden Scherkräfte begrenzt werden. Je größer das Verhältnis D_{A}/d_{A} ist, desto größer ist das freie Volumen bzw. die freie Querschnittsfläche.

Eine Aufbereitungsanlage nach Anspruch 15 gewährleistet eine einfache, flexible und effiziente Aufbereitung von Styrol-Acrylnitril. Dadurch, dass der entwässere Kautschuk an einer ersten Zuführstelle in die jeweilige Aufbereitungsschneckenmaschine zugeführt wird, die in der Förderrichtung stromaufwärts zu einer zweiten Zuführstelle des Styrol-Acrylnitrils angeordnet ist, kann der entwässerte Kautschuk direkt mit dem Styrol-Acrylnitril aufbereitet werden. Wird das Styrol-Acrylnitril als Schüttgut, beispielsweise als Pulver und/oder Granulat, in die jeweilige Aufbereitungsschneckenmaschine zugeführt, so können der entwässerte Kautschuk und das Styrol-Acrylnitril-Schüttgut gemeinsam plastifiziert bzw. mastiziert und homogenisiert werden. Wird das Styrol-Acrylnitril als Schmelze in die jeweilige Aufbereitungsschneckenmaschine zugeführt, so kann der entwässerte Kautschuk direkt in die Styrol-Acrylnitril-Schmelze zugeführt werden. Der entwässerte Kautschuk wird direkt in der Styrol-Acrylnitril-Schmelze aufgeschmolzen und mit dieser homogenisiert.

Eine Aufbereitungsanlage nach Anspruch 16 gewährleistet eine einfache, flexible und effiziente Aufbereitung von Styrol-Acrylnitril. Durch die Stauzone zwischen der ersten Zuführöffnung zum Zuführen des entwässerten Kautschuks und der zweiten Zuführöffnung zum Zuführen des Styrol-Acrylnitrils wird verhindert, dass beim Aufbereiten des entwässerten Kautschuks und des Styrol-Acrylnitrils austretende Feuchtigkeit bzw. entstehender Wasserdampf entgegen der Förderrichtung in der jeweiligen Aufbereitungsschneckenmaschine zurückströmt und das Zuführen des entwässerten Kautschuks beeinträchtigt. Die jeweilige Aufbereitungsschneckenmaschine umfasst mindestens zwei Behandlungselementwellen. Die jeweilige Aufbereitungsschneckenmaschine weist in der Stauzone je Behandlungselementwelle mindestens ein Rückstauelement auf. Das mindestens eine Rückstauelement hat eine Förderrichtung, die entgegengesetzt zu der Förderrichtung der jeweiligen Aufbereitungsschneckenmaschine gerichtet ist. Durch das mindestens eine Rückstauelement je Behandlungselementwelle wird in der Stauzone eine Dichtung ausgebildet, die ein Zurückströmen der ausgetretenen Feuchtigkeit bzw. des entstandenen Wasserdampfs verhindert. Die jeweilige Dichtung ist insbesondere eine Schmelzedichtung.

Eine Aufbereitungsanlage nach Anspruch 17 gewährleistet eine einfache, flexible und effiziente Aufbereitung von Styrol-Acrylnitril. Durch die mindestens eine erste Entgasungszone, die in der Förderrichtung stromaufwärts zu der zweiten Zuführöffnung angeordnet ist, wird der entwässerte Kautschuk vor dem Zuführen des Styrol-Acrylnitrils nochmals entgast. Der restliche zweite Wassergehalt W₂ des entwässerten Kautschuks wird in der mindestens einen ersten Entgasungszone nochmals reduziert. Hierzu ist in der mindestens einen ersten Entgasungszone mindestens ein Knetelement angeordnet, das den entwässerten Kautschuk intensiv durchmischt, so dass der restliche zweite Wassergehalt W₂ zumindest teilweise in Form von Wasserdampf entweichen kann. Der mindestens einen ersten Entgasungszone ist mindestens eine Entgasungsöffnung zugeordnet, die in einem Gehäuse der jeweiligen Aufbereitungsschneckenmaschine ausgebildet ist. Durch die mindestens eine Entgasungsöffnung kann der Wasserdampf aus dem Gehäuse entweichen. An die mindestens eine Entgasungsöffnung kann eine zugehörige erste Entgasungseinrichtung angeschlossen sein. Vorzugsweise weist die jeweilige Aufbereitungsschneckenmaschine mindestens zwei erste Entgasungszonen auf, die nacheinander und in der Förderrichtung stromaufwärts zu der zweiten Zuführöffnung angeordnet sind. Zwischen unmittelbar nacheinander angeordneten ersten Entgasungszonen kann eine Stauzone zur Ausbildung einer Dichtung, insbesondere einer Schmelzedichtung, ausgebildet sein.

Eine Aufbereitungsanlage nach Anspruch 18 gewährleistet eine einfache, flexible und effiziente Aufbereitung von Styrol-Acrylnitril. Stromabwärts zu der zweiten Zuführöffnung wird aus dem entwässerten Kautschuk und dem Styrol-Acrylnitril eine Mischung in Form einer Schmelze erzeugt. In der mindestens einen zweiten Entgasungszone wird diese Schmelze intensiv durchmischt und homogenisiert, so dass aus dieser Schmelze restliches Wasser und/oder weitere flüchtige Bestandteile entweichen können. Die jeweilige Aufbereitungsschneckenmaschine umfasst mindestens zwei Behandlungselementwellen. In der mindestens einen zweiten Entgasungszone ist mindestens ein Knetelement je Behandlungselementwelle angeordnet. Der mindestens einen zweiten Entgasungszone ist mindestens eine zweite Entgasungsöffnung zugeordnet, die in dem Gehäuse der jeweiligen Aufbereitungsschneckenmaschine ausgebildet ist. Das restliche Wasser bzw. der restliche Wasserdampf und/oder die weiteren flüchtigen Bestandteile können durch die mindestens eine zweite Entgasungsöffnung entweichen. Die mindestens eine zweite Entgasungsöffnung kann an jeweils an eine zugehörige zweite Entgasungseinrichtung angeschlossen sein. Vorzugsweise sind stromabwärts zu der zweiten Zuführöffnung mindestens zwei zweite Entgasungszonen, vorzugsweise zwischen zwei bis vier zweite Entgasungszonen nacheinander angeordnet. Zwischen unmittelbar aufeinanderfolgenden zweiten Entgasungszonen kann eine jeweilige Stauzone zur Ausbildung einer Dichtung, insbesondere einer Schmelzdichtung, ausgebildet sein. Vorzugsweise ist jeder zweiten Entgasungszone eine zweite Entgasungsöffnung zugeordnet. Die zweiten Entgasungseinrichtungen können insbesondere eine zweiwellige Seitenentgasungsschneckenmaschine umfassen.

Weitere Merkmale, Vorteile und Einzelheiten der Erfindung sind nachfolgend anhand mehrerer Ausführungsbeispiele beschrieben. Es zeigen:
- Fig. 1: eine teilweise geschnittene Draufsicht auf eine Aufbereitungsanlage zur Aufbereitung von Styrol-Acrylnitril gemäß einem ersten Ausführungsbeispiel mit einer Entwässerungsschneckenmaschine, einer Zuführeinrichtung und einer Aufbereitungsschneckenmaschine,
- Fig. 2: eine Schnittansicht durch die Aufbereitungsanlage in Fig. 1 entlang der Schnittlinie II-II,
- Fig. 3: eine Schnittansicht durch die Aufbereitungsanlage in Fig. 1 entlang der Schnittlinie III-III,
- Fig. 4: eine Schnittansicht entsprechend Fig. 2 durch eine Aufbereitungsanlage zur Aufbereitung von Styrol-Acrylnitril gemäß einem zweiten Ausführungsbeispiel, und
- Fig. 5: eine Schnittansicht entsprechend Fig. 3 durch die Aufbereitungsanlage gemäß dem zweiten Ausführungsbeispiel.

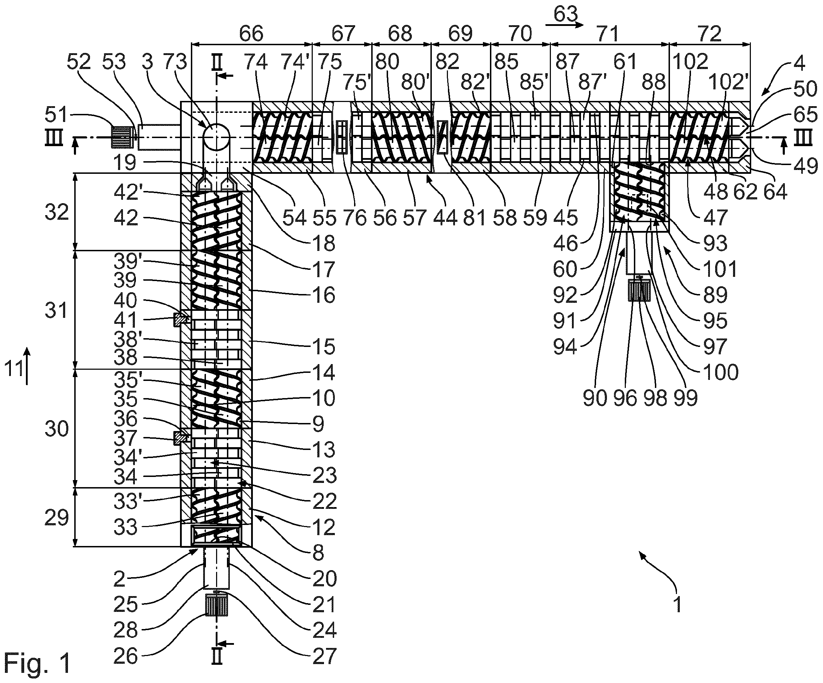

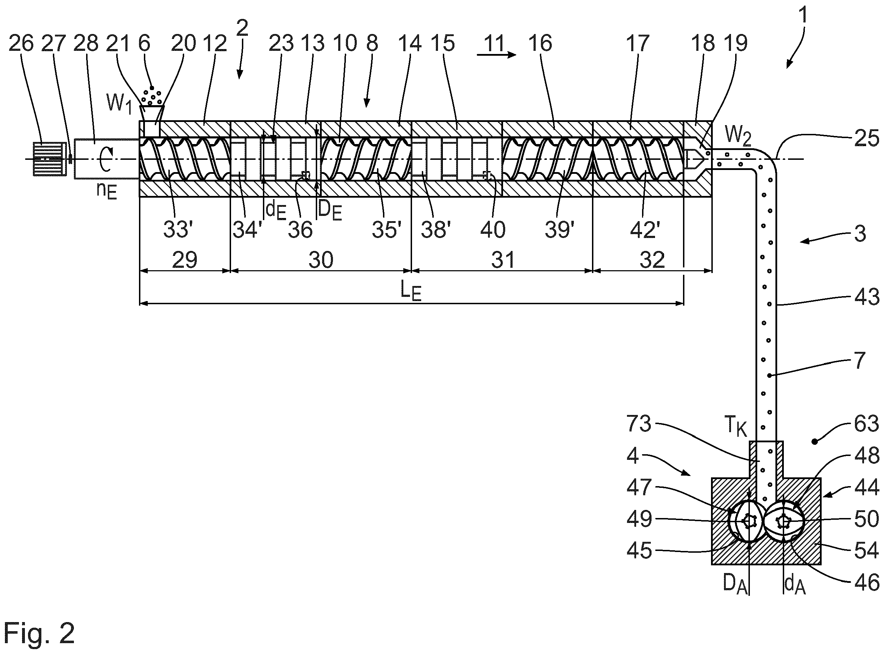

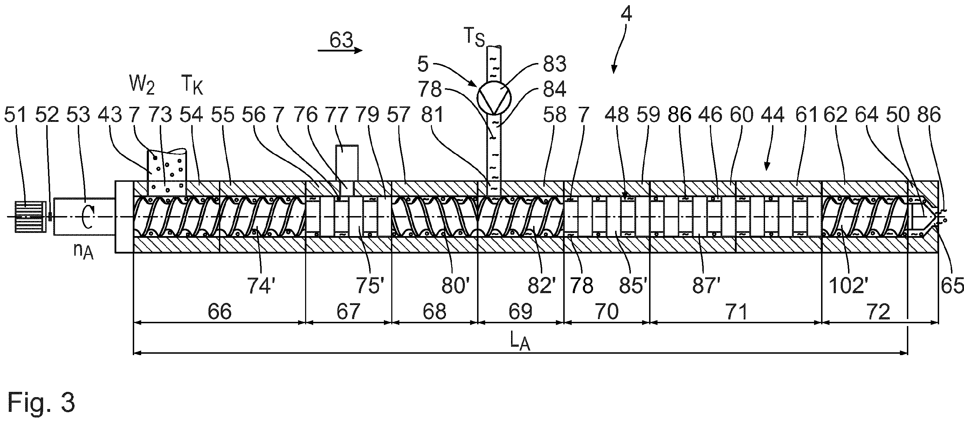

Nachfolgend ist anhand der Fig. 1 bis 3 ein erstes Ausführungsbeispiel der Erfindung beschrieben. Die in den Fig. 1 bis 3 dargestellte Aufbereitungsanlage 1 dient zum kontinuierlichen Aufbereiten von Styrol-Acrylnitril (SAN). Zur Aufbereitung des Styrol-Acrylnitrils umfasst die Aufbereitungsanlage 1 eine Entwässerungsschneckenmaschine 2, eine erste Zuführeinrichtung 3, eine Aufbereitungsschneckenmaschine 4 und eine zweite Zuführeinrichtung 5.

Die Entwässerungsschneckenmaschine 2 dient zum Entwässern von nassem Kautschuk 6 und zum Bereitstellen von entwässertem Kautschuk 7. Die Entwässerungsschneckenmaschine 2 ist als gleichläufige Mehrwellen-Entwässerungsschneckenmaschine bzw. als gleichläufige Zweiwellen-Entwässerungsschneckenmaschine ausgebildet. Die Entwässerungsschneckenmaschine 2 umfasst ein Gehäuse 8, in dem zwei zueinander parallele und einander durchdringende Gehäusebohrungen 9, 10 ausgebildet sind. Die Gehäusebohrungen 9, 10 haben im Querschnitt die Form einer liegenden Acht.

Das Gehäuse 8 umfasst mehrere in einer ersten Förderrichtung 11 nacheinander angeordnete Gehäuseabschnitte 12 bis 17, die miteinander zu dem Gehäuse 8 verbunden sind. Das Gehäuse 8 umfasst ferner eine Austragsplatte 18, die das Gehäuse 8 an dem letzten Gehäuseabschnitt 17 abschließt. Die Austragsplatte 18 ist mit dem letzten Gehäuseabschnitt 17 verbunden. Zum Austragen des entwässerten Kautschuks 7 umfasst die Austragsplatte 18 eine Austragsöffnung 19.

Zum Zuführen des nassen Kautschuks 6 in die Entwässerungsschneckenmaschine 2 ist in dem ersten Gehäuseabschnitt 12 eine Zuführöffnung 20 ausgebildet. Zum Zuführen umfasst die Entwässerungsschneckenmaschine 2 einen Zuführtrichter 21, der in die Zuführöffnung 20 mündet.

In den Gehäusebohrungen 9, 10 sind zwei Entwässerungswellen 22, 23 angeordnet, die um zugehörige Drehachsen 24, 25 in gleichen Drehrichtungen drehantreibbar sind. Zum Drehantreiben umfasst die Entwässerungsschneckenmaschine 2 einen elektrischen Antriebsmotor 26 und ein Verzweigungsgetriebe 28, zwischen denen eine Kupplung 27 angeordnet ist. Die Entwässerungswellen 22, 23 werden mittels des Antriebsmotors 26 über das Verzweigungsgetriebe 28 in gleichen Drehrichtungen um die Drehachsen 24, 25 drehangetrieben.

Die Entwässerungsschneckenmaschine 2 bildet in der ersten Förderrichtung 11 nacheinander eine Einzugszone 29, eine erste Entwässerungszone 30, eine zweite Entwässerungszone 31 und eine Austragszone 32 aus. In der Einzugszone 29 ist die Zuführöffnung 20 in dem Gehäuseabschnitt 12 ausgebildet. Die Zuführung des nassen Kautschuks 6 erfolgt durch den Zuführtrichter 21. In der Einzugszone 29 weisen die Entwässerungswellen 22, 23 Förderelemente 33, 33' bzw. Schneckenelemente auf.

Alternativ kann der nasse Kautschuk 6 mittels einer Stopfschnecke, die vertikal oder horizontal angeordnet ist, in die Zuführöffnung 21 zugeführt werden. Bei einer horizontalen Stopfschnecke ist die Zuführöffnung 20 seitlich in dem Gehäuseabschnitt 12 ausgebildet.

In der Einzugszone 29 wird der nasse Kautschuk 6 in der ersten Förderrichtung 11 zu der ersten Entwässerungszone 30 gefördert. In der ersten Entwässerungszone 30 wird der nasse Kautschuk 6 entwässert. Hierzu weisen die Entwässerungswellen 22, 23 in der ersten Förderrichtung 11 nacheinander Knetelemente 34, 34' und Rückstauelemente 35, 35' auf. Die Knetelemente 34, 34' umfassen insbesondere Knetblöcke mit einteilig miteinander verbundenen Knetscheiben und/oder einzelne Knetscheiben. Die Rückstauelemente 35, 35' sind als Schneckenelemente ausgebildet, deren Förderrichtung entgegengesetzt zu der ersten Förderrichtung 11 ist. Durch die Steigung der Rückstauelemente 35, 35' kann die Stauwirkung und somit die Verweildauer des nassen Kautschuks 6 in der ersten Entwässerungszone 30 eingestellt werden.

In der ersten Entwässerungszone 30 ist in dem Gehäuse 8 eine erste Entwässerungsöffnung 36 ausgebildet. Durch die erste Entwässerungsöffnung 36 kann abgequetschtes Wasser in der ersten Entwässerungszone 30 aus dem Gehäuse 8 abfließen. Die erste Entwässerungsöffnung 36 ist beispielsweise im Bereich der Knetelemente 34, 34' angeordnet. Die Entwässerungsschneckenmaschine 2 umfasst einen ersten Filtereinsatz 37, der in der ersten Entwässerungsöffnung 36 angeordnet ist. Der erste Filtereinsatz 37 hält den nassen Kautschuk 6 zurück, ermöglicht jedoch ein Abfließen des Wassers. Alternativ zu dem ersten Filtereinsatz 37 kann an die erste Entwässerungsöffnung 36 eine Abführschneckenmaschine angeschlossen sein.

Die Abführschneckenmaschine kann beispielsweise als Zweiwellen-Abführschneckenmaschine ausgebildet sein, die gleichsinnig oder gegensinnig rotiert. Die Abführschneckenmaschine kann seitlich angeschlossen sein.

Durch die Förderwirkung der Förderelemente 33, 33' wird der nasse Kautschuk 6 durch die erste Entwässerungszone 30 in die zweite Entwässerungszone 31 gedrückt. In der zweiten Entwässerungszone 31 erfolgt eine weitere Entwässerung des nassen Kautschuks 6. In der zweiten Entwässerungszone 31 weisen die Entwässerungswellen 22, 23 in der ersten Förderrichtung 11 nacheinander Knetelemente 38, 38' und Rückstauelemente 39, 39' auf. Die Knetelemente 38, 38' umfassen insbesondere Knetblöcke mit einteilig miteinander verbundenen Knetscheiben und/oder einzelne Knetscheiben. Die Rückstauelemente 39, 39' sind als Schneckenelemente ausgebildet, deren Förderrichtung entgegengesetzt zu der ersten Förderrichtung 11 ist. Durch die Steigung der Rückstauelemente 39, 39` kann die Rückstauwirkung und somit die Verweildauer des nassen Kautschuks 6 in der zweiten Entwässerungszone 31 eingestellt werden.

Zum Abführen des abgequetschten Wassers ist in der zweiten Entwässerungszone 31 eine zweite Entwässerungsöffnung 40 in dem Gehäuse 8 ausgebildet. Die zweite Entwässerungsöffnung 40 ist im Bereich der Knetelemente 38, 38' angeordnet. Die Entwässerungsschneckenmaschine 2 umfasst einen zweiten Filtereinsatz 41, der in der zweiten Entwässerungsöffnung 40 angeordnet ist. Der zweite Filtereinsatz 41 hält den nassen Kautschuk 6 zurück, ermöglicht jedoch das Abführen des abgequetschten Wassers. Alternativ zu dem zweiten Filtereinsatz 41 kann an die zweite Entwässerungsöffnung 40 eine Abführschneckenmaschine angeschlossen sein.

Die Abführschneckenmaschine kann beispielsweise als Zweiwellen-Abführschneckenmaschine ausgebildet sein, die gleichsinnig oder gegensinnig rotiert. Die Abführschneckenmaschine kann seitlich angeschlossen sein.

Durch das Entwässern des nassen Kautschuks 6 in den Entwässerungszonen 30, 31 wird in der Austragszone 32 der entwässerte Kautschuk 7 bereitgestellt. In der Austragszone 32 weisen die Entwässerungswellen 22, 23 Förderelemente 42, 42' bzw. Schneckenelemente auf.

Die Entwässerungswellen 22, 23 sind zweigängig ausgebildet. Die Entwässerungswellen 22, 23 weisen in der ersten Förderrichtung 11 eine Länge L_{E} auf. Ferner weisen die Entwässerungswellen 22, 23 einen Außendurchmesser D_{E} und einen Innendurchmesser d_{E} auf.

Für ein Verhältnis der Länge L_{E} zu dem Außendurchmesser D_{E} gilt: 16 ≤ L_{E}/D_{E} ≤ 40, insbesondere 18 ≤ L_{E}/D_{E} ≤ 34, und insbesondere 20 ≤ L_{E}/D_{E} ≤ 28.

Für ein Verhältnis des Außendurchmessers D_{E} zu dem Innendurchmesser d_{E} gilt: 1,22 ≤ D_{E}/d_{E} < 1,8, insbesondere 1,4 ≤ D_{E}/d_{E} < 1,66, und insbesondere 1,5 ≤ D_{E}/d_{E} < 1,6.

Die erste Zuführeinrichtung 3 dient zum Zuführen des entwässerten Kautschuks 7 in die Aufbereitungsschneckenmaschine 4. Die erste Zuführeinrichtung 3 umfasst eine Zuführrohrleitung 43. Die Zuführrohrleitung 43 verbindet die Entwässerungsschneckenmaschine 2 mit der Aufbereitungsschneckenmaschine 4. Hierzu ist die Zuführrohrleitung 43 an die Austragsöffnung 19 angeschlossen.

Die Aufbereitungsschneckenmaschine 4 ist als gleichläufige Mehrwellen-Aufbereitungsschneckenmaschine bzw. als gleichläufige Zweiwellen-Aufbereitungsschneckenmaschine ausgebildet. Die Aufbereitungsschneckenmaschine 4 umfasst ein Gehäuse 44, in dem zwei zueinander parallele und einander durchdringende Gehäusebohrungen 45, 46 ausgebildet sind. Die Gehäusebohrungen 45, 46 haben im Querschnitt die Form einer liegenden Acht. In den Gehäusebohrungen 45, 46 sind zwei Behandlungselementwellen 47, 48 angeordnet, die um zugehörige Drehachsen 49, 50 in gleichen Drehrichtungen drehantreibbar sind. Zum Drehantreiben umfasst die Aufbereitungsschneckenmaschine 4 einen elektrischen Antriebsmotor 51 und ein Verzweigungsgetriebe 53, zwischen denen eine Kupplung 52 angeordnet ist. Die Behandlungselementwellen 47, 48 werden mittels des Antriebsmotors 51 über das Verzweigungsgetriebe 53 in gleichen Drehrichtungen um die Drehachsen 49, 50 drehangetrieben.

Das Gehäuse 44 umfasst mehrere Gehäuseabschnitte 54 bis 62, die in einer zweiten Förderrichtung 63 nacheinander angeordnet und miteinander zu dem Gehäuse 44 verbunden sind. Das Gehäuse 44 umfasst eine Austragsplatte 64, die mit dem letzten Gehäuseabschnitt 62 verbunden ist und das Gehäuse 44 abschließt. Die Austragsplatte 64 umfasst eine Austragsöffnung 65.

Die Aufbereitungsschneckenmaschine 4 bildet in der zweiten Förderrichtung 63 nacheinander eine erste Einzugszone 66, eine erste Entgasungszone 67, eine Stauzone 68, eine zweite Einzugszone 69, eine Aufschmelzzone 70, eine zweite Entgasungszone 71, und eine Austragszone 72 aus.

In der ersten Einzugszone 66 weist das Gehäuse 44 eine erste Zuführöffnung 73 auf. Die erste Zuführöffnung 73 dient zum Zuführen des entwässerten Kautschuks 7. Hierzu mündet die Zuführrohrleitung 43 in die erste Zuführöffnung 73. In der ersten Einzugszone 66 wird der zugeführte entwässerte Kautschuk 7 in der zweiten Förderrichtung 63 zu der ersten Entgasungszone 67 gefördert. Hierzu weisen die Behandlungselementwellen 47, 48 in der ersten Einzugszone 66 Förderelemente 74, 74' bzw. Schneckenelemente auf.

Die erste Entgasungszone 67 dient zur Reduzierung des im entwässerten Kautschuks 7 verbliebenen Wassers. Hierzu umfassen die Behandlungselementwellen 47, 48 in der ersten Entgasungszone 67 Knetelemente 75, 75'. Die Knetelemente 75, 75' umfassen insbesondere Knetblöcke mit einteilig miteinander verbundene Knetscheiben und/oder einzelne Knetscheiben. Durch das intensive Kneten des entwässerten Kautschuks 7 tritt Wasserdampf aus. Zum Entweichen des Wasserdampfs umfasst das Gehäuse 44 in der ersten Entgasungszone 67 eine erste Entgasungsöffnung 76. Die Aufbereitungsanlage 1 umfasst eine erste Entgasungseinrichtung 77, die an die erste Entgasungsöffnung 76 angeschlossen ist. Die erste Entgasungseinrichtung 77 ist beispielsweise als Vakuum-Entgasungsdom ausgebildet.

Das Styrol-Acrylnitril wird der Aufbereitungsschneckenmaschine 4 in der zweiten Einzugszone 69 als Styrol-Acrylnitril-Schmelze 78 (SAN-Schmelze) zugeführt. Die in der zweiten Förderrichtung 63 stromaufwärts angeordnete Stauzone 68 dient zur Ausbildung einer Schmelzedichtung 79 mit Hilfe der SAN-Schmelze 78. Hierzu umfassen die Behandlungselementwellen 47, 48 in der Stauzone 68 Rückstauelemente 80, 80'. Die Rückstauelemente 80, 80' sind als Schneckenelemente ausgebildet, deren Förderrichtung entgegengesetzt zu der zweiten Förderrichtung 63 gerichtet ist. Mittels der Rückstauelemente 80, 80' kann auch die Verweildauer des entwässerten Kautschuks 7 in der ersten Entgasungszone 67 eingestellt werden.

In der zweiten Einzugszone 69 weist das Gehäuse 44 eine zweite Zuführöffnung 81 auf. Die zweite Zuführöffnung 81 dient zum Zuführen der SAN-Schmelze 78. Die erste Zuführöffnung 73, die erste Entgasungszone 67 und die Stauzone 68 sind somit in der zweiten Förderrichtung 63 stromaufwärts zu der zweiten Zuführöffnung 81 angeordnet. Der entwässerte Kautschuk 7 wird somit in der zweiten Förderrichtung 63 stromaufwärts zu der SAN-Schmelze 78 zugeführt. In der zweiten Einzugszone 69 umfassen die Behandlungselementwellen 47, 48 Förderelemente 82, 82' bzw. Schneckenelemente. Die Förderelemente 82, 82' dienen zum Fördern des entwässerten Kautschuks 7 und der SAN-Schmelze 78 in die Aufschmelzzone 70.

Die zweite Zuführeinrichtung 5 dient zum Zuführen der SAN-Schmelze 78. Die zweite Zuführeinrichtung 5 umfasst eine Schmelzepumpe 83 und eine Zuführrohrleitung 84. Die Zuführrohrleitung 84 mündet in die zweite Zuführöffnung 81. Die Schmelzepumpe 83 dient zum Fördern der SAN-Schmelze 78 durch die Zuführrohrleitung 74 in die zweite Zuführöffnung 81. Die SAN-Schmelze 78 wird beispielsweise von einer Produktionsanlage bereitgestellt.

In der Aufschmelzzone 70 wird der entwässerte Kautschuk 7 in der SAN-Schmelze 78 mastiziert und mit dieser homogenisiert. Hierzu umfassen die Behandlungselementwellen 47, 48 in der Aufschmelzzone 70 Knetelemente 85, 85'. Die Knetelemente 85, 85' umfassen insbesondere Knetblöcke mit einteilig miteinander verbundenen Knetscheiben und/oder einzelne Knetscheiben.

Aus dem entwässerten Kautschuk 7 und der SAN-Schmelze 78 wird in der Aufschmelzzone 70 eine schmelzeförmige Mischung 86 erzeugt, die in die zweite Entgasungszone 71 gefördert wird. Die zweite Entgasungszone 71 ist in der zweiten Förderrichtung 63 stromabwärts zu der zweiten Zuführöffnung 81 angeordnet. Die schmelzeförmige Mischung 86 wird in der zweiten Entgasungszone 71 geknetet und homogenisiert. Hierdurch tritt Wasserdampf und/oder weitere flüchtige Bestandteile aus der schmelzförmigen Mischung 86 aus. Zum Kneten und Homogenisieren umfassen die Behandlungselementwellen 47, 48 in der zweiten Entgasungszone 71 Knetelemente 87, 87'. Die Knetelemente 87, 87' umfassen insbesondere Knetblöcke mit einteilig miteinander verbundenen Knetscheiben und/oder einzelne Knetscheiben. Zum Abführen des Wasserdampfs und/oder der weiteren flüchtigen Bestandteile umfasst das Gehäuse 44 in der zweiten Entgasungszone 71 eine zweite Entgasungsöffnung 88. Die zweite Entgasungsöffnung 88 ist seitlich in dem Gehäuse 44 bzw. in dem Gehäuseabschnitt 61 ausgebildet.

Die Aufbereitungsanlage 1 umfasst eine zweite Entgasungseinrichtung 89 zum Abführen des Wasserdampfs und/oder der weiteren flüchtigen Bestandteile aus der zweiten Entgasungszone 71. Die zweite Entgasungseinrichtung 89 umfasst eine zweiwellige Entgasungsschneckenmaschine 90. Die Entgasungsschneckenmaschine 90 umfasst ein Gehäuse 91, in dem zwei zueinander parallele und einander durchdringende Gehäusebohrungen 92, 93 ausgebildet sind. Die Gehäusebohrungen 92, 93 haben im Querschnitt die Form einer liegenden Acht. In den Gehäusebohrungen 92, 93 sind zwei Schneckenwellen 94, 95 angeordnet, die um zugehörigen Drehachsen 96, 97 in gleichen Drehrichtungen drehantreibbar sind. Zum Drehantreiben umfasst die Entgasungsschneckenmaschine 90 einen elektrischen Antriebsmotor 98 und ein Verzweigungsgetriebe 100, zwischen denen eine Kupplung 99 angeordnet ist. Die Schneckenwellen 94, 95 werden mittels des Antriebsmotors 98 über das Verzweigungsgetriebe 100 in gleichen Drehrichtungen um die Drehachsen 96, 97 drehangetrieben. Das Gehäuse 91 umfasst eine Abführöffnung 101 zum Abführen des Wasserdampfs und/oder der weiteren flüchtigen Bestandteile aus der Entgasungsschneckenmaschine 90. Die zweite Entgasungseinrichtung 89 kann eine Saugeinheit umfassen, die zum Absaugen des Wasserdampfs und/oder der flüchtigen Bestandteile an die Abführöffnung 101 angeschlossen ist.

Das Gehäuse 91 der Entgasungsschneckenmaschine 90 ist mit dem Gehäuse 44 der Aufbereitungsschneckenmaschine 4 verbunden. Die Schneckenwellen 94, 95 erstrecken sich hierbei in die zweite Entgasungsöffnung 88.

In der Austragszone 72 wird die homogenisierte und entgaste Mischung 86 aus der Aufbereitungsschneckenmaschine 4 ausgetragen. Hierzu umfassen die Behandlungselementwellen 47, 48 in der Austragszone 72 Förderelemente 102, 102' bzw. Schneckenelemente. Die Förderelemente 102, 102' fördern die Mischung 86 durch die Austragsöffnung 65.

Die Behandlungselementwellen 47, 48 weisen in der zweiten Förderrichtung 63 eine Länge L_{A} auf. Ferner weisen die Behandlungselementwellen 47, 48 einen Außendurchmesser D_{A} und einen Innendurchmesse d_{A} auf.

Für ein Verhältnis der Länge L_{A} zu dem Außendurchmesser D_{A} gilt: 20 ≤ L_{A}/D_{A} ≤ 60, insbesondere 28 ≤ L_{A}/D_{A} ≤ 52, und insbesondere 36 ≤ L_{A}/D_{A} ≤ 40.

Ferner gilt für ein Verhältnis des Außendurchmessers D_{A} zu dem Innendurchmesser d_{A}: 1,22 ≤ D_{A}/d_{A} ≤ 1,8, insbesondere 1,4 ≤ D_{A}/d_{A} < 1,66, und insbesondere 1,5 ≤ D_{A}/d_{A} < 1,6.

Die Aufbereitungsanlage 1 kann eine nicht näher dargestellte Schmelzepumpe und/oder Filtereinrichtung und/oder Granuliereinrichtung umfassen, die nach der Aufbereitungsschneckenmaschine 4 angeordnet ist bzw. sind. Die Granuliereinrichtung dient zur Herstellung von Granulat aus der ausgetragenen Mischung 86.

Die Funktionsweise der Aufbereitungsanlage 1 ist wie folgt:
Der nasse Kautschuk 6 wird durch den Zuführtrichter 21 und die Zuführöffnung 20 in die Entwässerungsschneckenmaschine 2 zugeführt. Der nasse Kautschuk 6 hat einen ersten Wassergehalt W₁. Der erste Wasser gehalt W₁ beträgt mindestens 20 Gew.-%, insbesondere mindestens 30 Gew.-%, insbesondere mindestens 40 Gew.-%, und insbesondere mindestens 50 Gew.-%.

Der nasse Kautschuk 6 ist beispielsweise ein Naturkautschuk und/oder ein Synthesekautschuk. Vorzugsweise ist der nasse Kautschuk 6 ein Synthesekautschuk, beispielsweise Acrylnitril-Butadien-Styrol (ABS).

In der Einzugszone 29 wird der nasse Kautschuk 6 in die erste Entwässerungszone 30 gefördert. In der ersten Entwässerungszone 30 wird der nasse Kautschuk 6 mittels der Knetelemente 34, 34' geknetet, so dass Wasser von dem nassen Kautschuk 6 abgequetscht wird. Durch die Rückstauelemente 35, 35' wird einerseits die Verweildauer des nassen Kautschuks 6 im Bereich der Knetelemente 34, 34' eingestellt und andererseits verhindert, dass Wasser in der ersten Förderrichtung 11 stromabwärts strömen kann. Das abgequetschte Wasser strömt durch die erste Entwässerungsöffnung 36 und den ersten Filtereinsatz 37 aus dem Gehäuse 8 der Entwässerungsschneckenmaschine 2. Der erste Filtereinsatz 37 hält den nassen Kautschuk 6 zurück.

Der nasse Kautschuk 6 wird in der ersten Förderrichtung 11 in die zweite Entwässerungszone 31 gedrückt, wo eine weitere Entwässerung stattfindet. Mittels der Knetelemente 38, 38' wird der nasse Kautschuk 6 geknetet und weiteres Wasser abgequetscht. Mittels der Rückstauelemente 39, 39' wird einerseits die Verweildauer des nassen Kautschuks 6 im Bereich der Knetelemente 38, 38' eingestellt und andererseits verhindert, dass das abgequetschte Wasser in der ersten Förderrichtung 11 stromabwärts strömt. Das abgequetschte Wasser strömt durch die zweite Entwässerungsöffnung 40 und den zweiten Filtereinsatz 41 und wird aus dem Gehäuse 8 abgeführt. Der zweite Filtereinsatz 41 hält den nassen Kautschuk 6 zurück.

Der nasse Kautschuk 6 wird in den Entwässerungszone 30, 31 somit sukzessive entwässert, so dass in der Austragszone 32 der entwässerte Kautschuk 7 vorliegt. Der entwässerte Kautschuk 7 hat einen zweiten Wassergehalt W₂, der kleiner als der erste Wassergehalt W₁ ist. Der zweite Wasserhalt W₂ beträgt höchstens 20 Gew.-%, insbesondere höchstens 16 Gew.-%, insbesondere höchstens 12 Gew.-%, insbesondere höchstens 11 Gew.-%, insbesondere höchstens 10 Gew.-%, insbesondere höchstens 8 Gew.-%, insbesondere höchstens 6 Gew.-%, insbesondere höchstens 5 Gew.-%, und insbesondere höchstens 2 Gew.-%.

Für eine relative Wassergehaltänderung ΔW = (Wi - W₂)/W₁ gilt insbesondere 50 % ≤ ΔW ≤ 99 %, insbesondere 60 % ≤ ΔW ≤ 95 %, und insbesondere 70 % ≤ ΔW ≤ 90 %.

Die Entwässerungsschneckenmaschine 2 wird mit einer Drehzahl n_{E} der Entwässerungswellen 22, 23 betrieben. Für die Drehzahl n_{E} gilt:
40 rpm ≤ n_{E} ≤ 600 rpm, insbesondere 50 rpm ≤ n_{E} ≤ 400 rpm, und insbesondere 60 rpm ≤ n_{E} ≤ 300 rpm.

Der entwässerte Kautschuk 7 wird durch die Austragsöffnung 19 ausgetragen und der ersten Zuführeinrichtung 3 zugeführt. Der entwässerte Kautschuk 7 strömt durch die Zuführrohrleitung 43 von der Austragsöffnung 19 zu der ersten Zuführöffnung 73 der Aufbereitungsschneckenmaschine 4. Der entwässerte Kautschuk 7 wird durch die erste Zuführöffnung 73 in die erste Einzugszone 66 der Aufbereitungsschneckenmaschine 4 zugeführt. Beim Zuführen in die Aufbereitungsschneckenmaschine 4 hat der entwässerte Kautschuk 7 eine Temperatur T_{K}. Für die Temperatur T_{K} gilt:
60°C ≤ T_{K} ≤ 140°C, insbesondere 70°C ≤ T_{K} ≤ 130°C, insbesondere 85°C ≤ T_{K} ≤ 120°C, und insbesondere 100°C ≤ T_{K} ≤ 110°C.

Der entwässerte Kautschuk 7 wird mittels der Förderelemente 74, 74' in der zweiten Förderrichtung 63 zu der ersten Entgasungszone 67 gefördert. Mittels der Knetelemente 75, 75' wird der entwässerte Kautschuk 7 geknetet, so dass restliches Wasser als Wasserdampf entweicht und der zweite Wassergehalt W₂ weiter reduziert wird. Der entweichende Wasserdampf wird mittels der ersten Entgasungseinrichtung 77 durch die erste Entgasungsöffnung 76 aus dem Gehäuse 44 abgeführt.

Die SAN-Schmelze 78 wird mittels der Schmelzepumpe 83 und der Zuführrohrleitung 84 durch die zweite Zuführöffnung 81 in die zweite Einzugszone 69 der Aufbereitungsschneckenmaschine 4 zugeführt. Der SAN-Schmelze 78 kann vor dem Zuführen in die Aufbereitungsschneckenmaschine 4 mindestens ein Additiv zugemischt werden. Der entwässerte Kautschuk 7 wird somit - in der zweiten Förderrichtung 63 betrachtet - stromaufwärts zu der SAN-Schmelze 78 in die Aufbereitungsschneckenmaschine 4 zugeführt. Ein geringer Teil der SAN-Schmelze 78 wird mittels der Rückstauelemente 80, 80' stromaufwärts zu der zweiten Förderrichtung 63 in die Stauzone 68 gefördert, wo die SAN-Schmelze 78 in den Gehäusebohrungen 45, 46 die Schmelzedichtung 79 ausbildet. Mittels der Rückstauelemente 80, 80' kann einerseits die Verweildauer des entwässerten Kautschuks 7 in der ersten Entgasungszone 67 eingestellt werden. Andererseits kann weiterer Wasserdampf, der in der zweiten Einzugszone 69 und der Aufschmelzzone 70 aufgrund des Kontakts des entwässerten Kautschuks 7 mit der heißen SAN-Schmelze 78 entsteht, nicht - in der zweiten Förderrichtung 63 betrachtet - stromaufwärts strömen, da die in der Stauzone 68 ausgebildete Schmelzedichtung 79 eine Barriere für den Wasserdampf bildet. Aufgrund der heißen SAN-Schmelze 78 kann nochmals restliches Wasser aus dem entwässerten Kautschuk 7 entweichen. Der stromabwärts zu der Stauzone 68 entstehende Wasserdampf kann somit nicht in die erste Entgasungszone 67 und ggf. weiter in die erste Einzugszone 66 strömen und die Zuführung des entwässerten Kautschuks 7 beeinträchtigen.

Eine Temperatur Ts der heißen SAN-Schmelze 78 ist höher als die Temperatur T_{K} des entwässerten Kautschuks 7. Dies führt einerseits dazu, dass restliches Wasser aus dem entwässerten Kautschuk 7 verdampft. Andererseits wird durch die abgeführte Verdampfungswärme die Temperatur Ts der SAN-Schmelze 78 und damit eine Temperatur der schmelzeförmigen Mischung 86 reduziert, wodurch das Aufbereiten schonend erfolgt. Die im Vergleich zu der Temperatur Ts niedrigere Temperatur T_{K} gewährleistet einerseits eine Verdampfung von restlichem Wasser, vermeidet jedoch andererseits nachteilige Effekte aufgrund eines zu großen Temperaturunterschieds zwischen der Temperatur Ts und der Temperatur T_{K}.

In der zweiten Einzugszone 69 werden der entwässerte Kautschuk 7 und die SAN-Schmelze 78 zu der Aufschmelzzone 70 gefördert. In der Aufschmelzzone 70 wird der entwässerte Kautschuk 7 in der SAN-Schmelze 78 mittels der Knetelemente 85, 85' mastiziert und durchmischt.

In der zweiten Entgasungszone 71 wird die in der Aufschmelzzone 70 erzeugte schmelzeförmige Mischung 86 homogenisiert und entgast. Durch das Kneten mittels der Knetelemente 87, 87' tritt weiterer Wasserdampf und/oder weitere flüchtige Bestandteile aus der Mischung 68 aus. Der Wasserdampf und/oder die weiteren flüchtigen Bestandteile werden mittels der zweiten Entgasungseinrichtung 89 durch die zweite Entgasungsöffnung 88 aus dem Gehäuse 44 abgeführt. Die Schneckenwellen 94, 95 rotieren derart um die Drehachsen 96, 97, dass die Mischung 86 nicht aus den Gehäusebohrungen 45, 46 entweichen kann. Demgegenüber wird der Wasserdampf und/oder die weiteren flüchtigen Bestandteile mittels der Saugeinheit durch die zweite Entgasungsöffnung 88, die Gehäusebohrungen 92, 93 und die Abführöffnung 101 abgesaugt.

In der Austragszone 72 wird die homogenisierte und entgaste Mischung 86 durch die Austragsöffnung 65 aus der Aufbereitungsschneckenmaschine 4 ausgetragen. Anschließend kann die ausgetragene Mischung 86 mittels einer Granuliereinrichtung granuliert und Granulat erzeugt werden.

Die Aufbereitungsschneckenmaschine 4 wird mit einer Drehzahl n_{A} der Behandlungselementwellen 47, 48 betrieben. Für die Drehzahl n_{A} gilt:
40 rpm ≤ n_{A} ≤ 1200 rpm, insbesondere 100 rpm ≤ n_{A} ≤ 1000 rpm, und insbesondere 200 rpm ≤ n_{A} ≤ 800 rpm.

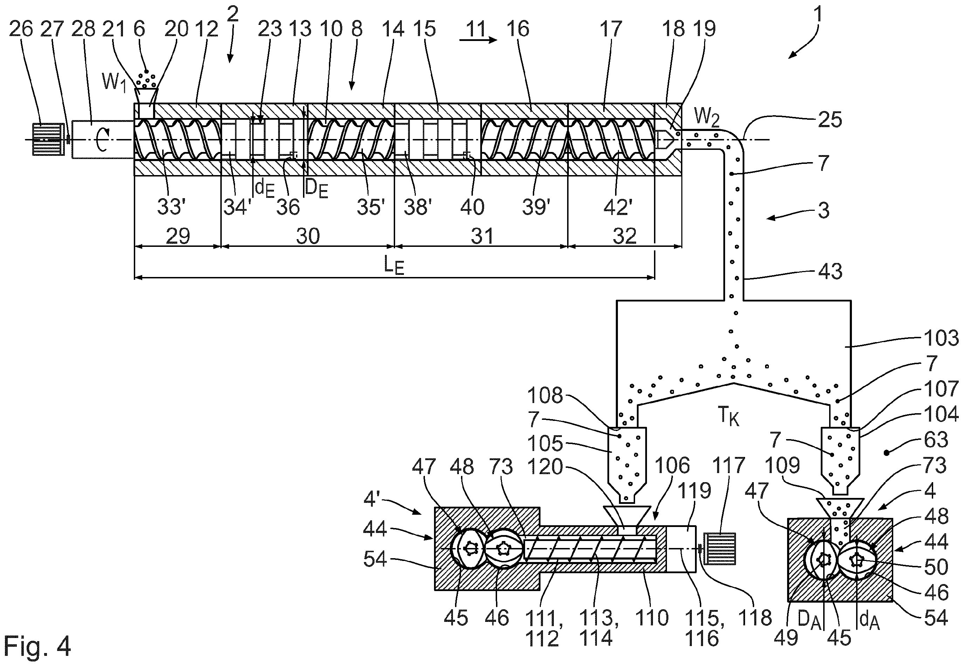

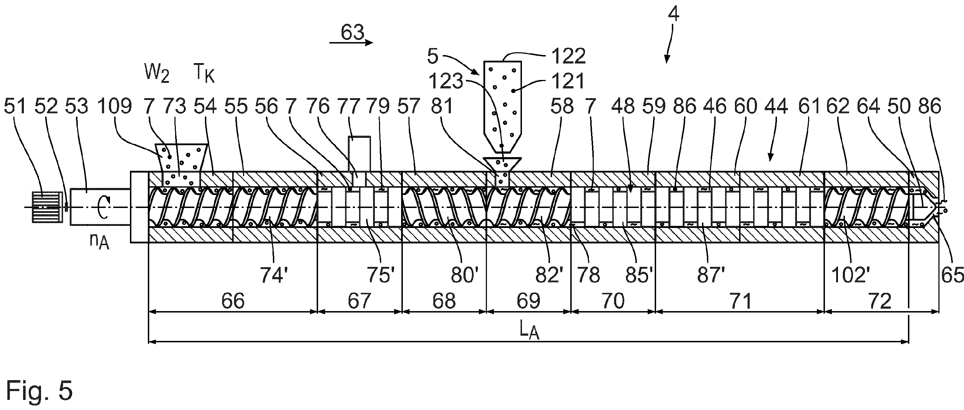

Nachfolgend ist anhand der Fig. 4 und 5 ein zweites Ausführungsbeispiel der Erfindung beschrieben. Im Unterschied zu dem ersten Ausführungsbeispiel umfasst die Aufbereitungsanlage 1 eine erste Aufbereitungsschneckenmaschine 4 und eine zweite Aufbereitungsschneckenmaschine 4', die parallel zueinander angeordnet sind. Den Aufbereitungsschneckenmaschinen 4, 4' wird in der bereits beschriebenen Weise mittels der Entwässerungsschneckenmaschine 2 entwässerter Kautschuk 7 bereitgestellt.

Im Unterschied zu dem ersten Ausführungsbeispiel umfasst die erste Zuführeinrichtung zusätzlich einen Pufferbehälter 103, einen ersten Dosierer 104, einen zweiten Dosierer 105, einen Zuführtrichter 109 und eine Zuführschneckenmaschine 106. Die Zuführrohrleitung 43 verbindet die Austragsöffnung 19 der Entwässerungsschneckenmaschine 2 mit dem Pufferbehälter 103. In dem Pufferbehälter 103 wird der entwässerte Kautschuk 7 zwischengelagert und gepuffert.

Ausgehend von dem Pufferbehälter 103 ist anhand der ersten Aufbereitungsschneckenmaschine 4 eine erste Zuführmöglichkeit beschrieben. Der Pufferbehälter 103 bildet eine erste Ausgangsöffnung 107 aus. Die erste Ausgangsöffnung 107 mündet in den ersten Dosierer 104. Der erste Dosierer 104 ist beispielsweise gravimetrisch oder volumetrisch ausgebildet. Der erste Dosierer 104 dosiert den entwässerten Kautschuk 7 in den Zuführtrichter 109 und führt somit den entwässerten Kautschuk 7 in die erste Zuführöffnung 73 der Aufbereitungsschneckenmaschine 4 zu. Hierzu ist der Zuführtrichter 109 an die erste Aufbereitungsschneckenmaschine 4 angeschlossen und mündet in die erste Zuführöffnung 73.

Ausgehend von dem Pufferbehälter 103 ist anhand der zweiten Aufbereitungsschneckenmaschine 4' eine zweite Zuführmöglichkeit beschrieben. Der Pufferbehälter 103 bildet eine zweite Ausgangsöffnung 108 aus. Die zweite Ausgangsöffnung 108 mündet in den zweiten Dosierer 105. Der zweite Dosierer 105 ist gravimetrisch oder volumetrisch ausgebildet. Der zweite Dosierer 105 dosiert den entwässerten Kautschuk 7 in die Zuführschneckenmaschine 106. Die Zuführschneckenmaschine 106 kann einwellig oder zweiwellig ausgebildet sein. Beispielsweise ist die Zuführschneckenmaschine 106 als zweiwellige Seiten-Zuführschneckenmaschine ausgebildet. Die zweiwellige Zuführschneckenmaschine 106 ist insbesondere gleichläufig ausgebildet.

Die Zuführschneckenmaschine 106 umfasst ein Gehäuse 110, in dem zwei zueinander parallele und einander durchdringende Gehäusebohrungen 111, 112 ausgebildet sind. Die Gehäusebohrungen 111, 112 haben im Querschnitt die Form einer liegenden Acht. In den Gehäusebohrungen 111, 112 sind zwei Schneckenwellen 113, 114 angeordnet, die um zugehörige Drehachsen 115, 116 in gleichen Drehrichtungen drehantreibbar sind. Zum Drehantreiben umfasst die Zuführschneckenmaschine 106 einen elektrischen Antriebsmotor 117 und ein Verzweigungsgetriebe 119, zwischen denen eine Kupplung 118 angeordnet ist. Die Schneckenwellen 113, 114 werden mittels des Antriebsmotors 117 über das Verzweigungsgetriebe 119 in gleichen Drehrichtungen um die Drehachsen 115, 116 drehangetrieben.

Das Gehäuse 110 ist mit dem Gehäuse 44, insbesondere mit dem ersten Gehäuseabschnitt 54 der zweiten Aufbereitungsschneckenmaschine 4' verbunden. Die erste Zuführöffnung 73 der zweiten Aufbereitungsschneckenmaschine 4' ist seitlich ausgebildet. Die Schneckenwellen 113, 114 erstrecken sich in die erste Zuführöffnung 73. Der zweite Dosierer 105 dosiert den entwässerten Kautschuk 7 in eine Zuführöffnung 120 der Zuführschneckenmaschine 106. Die Zuführschneckenmaschine 106 fördert den entwässerten Kautschuk 7 mittels der Schneckenwellen 113, 114 durch die erste Zuführöffnung 73 in die Gehäusebohrungen 45, 46 der zweiten Aufbereitungsschneckenmaschine 4'.

Im Unterschied zu dem ersten Ausführungsbeispiel wird das Styrol-Acrylnitril den Aufbereitungsschneckenmaschinen 4, 4' als Styrol-Acrylnitril-Schüttgut 121 (SAN-Schüttgut) zugeführt. Das SAN-Schüttgut 121 ist beispielsweise ein SAN-Pulver und/oder ein SAN-Granulat. Dem SAN-Schüttgut 121 kann vor dem Zuführen in die erste Aufbereitungsschneckenmaschine 4 und/oder in die zweite Aufbereitungsschneckenmaschine 4' mindestens ein Additiv zugemischt werden.

Die zweite Zuführeinrichtung 5 weist für die jeweilige Aufbereitungsschneckenmaschine 4, 4' einen Dosierer 122 und einen Zuführtrichter 123 auf. Der jeweilige Dosierer 122 ist gravimetrisch oder volumetrisch ausgebildet. Der jeweilige Dosierer 122 mündet in den zugehörigen Zuführtrichter 123. Der jeweilige Zuführtrichter 123 ist an die zugehörige zweite Zuführöffnung 81 angeschlossen. Das SAN-Schüttgut 121 wird mittels des jeweiligen Dosierer 122 in die zugehörige zweite Zuführöffnung 81 der Aufbereitungsschneckenmaschinen 4, 4' zugeführt. Zum Zuführen des SAN-Schüttguts 121 kann alternativ oder zusätzlich zu dem jeweiligen Dosierer 122 eine Zuführschneckenmaschine verwendet werden. Die jeweilige Zuführschneckenmaschine kann als zweiwellige Seiten-Zuführschneckenmaschine ausgebildet sein. Die jeweilige zweiwellige Zuführschneckenmaschine kann insbesondere gleichläufig ausgebildet sein. Das SAN-Schüttgut 121 und der entwässerte Kautschuk 7 werden zusammen in der jeweiligen Aufschmelzzone 70 plastifiziert bzw. mastiziert und durchmischt. Die Temperatur T_{K} des entwässerten Kautschuks 7 kann zum Aufschmelzen energieeffizient genutzt werden. Das SAN-Schüttgut 121 und/oder die daraus erzeugte SAN-Schmelze 78 bilden in der Stauzone 68 eine Dichtung aus, insbesondere eine Schmelzedichtung 79.

Hinsichtlich des weiteren Aufbaus und der weiteren Funktionsweise der Aufbereitungsanlage 1 wird auf das vorangegangene Ausführungsbeispiel verwiesen.

### Allgemein gilt:

Weist die Aufbereitungsanlage mehrere Aufbereitungsschneckenmaschinen auf, so können die mehreren Aufbereitungsschneckenmaschinen gleich und/oder unterschiedlich aufgebaut sein und/oder gleich und/oder unterschiedlich betrieben werden. Die mehreren Aufbereitungsschneckenmaschinen können zur Erhöhung der Kapazität bei der Herstellung einer Mischung aus dem entwässerten Kautschuk und dem Styrol-Acrylnitril dienen und/oder zur Herstellung unterschiedlicher Mischungen aus dem entwässerten Kautschuk und dem Styrol-Acrylnitril dienen.

## Patentansprüche

1. Verfahren zur Aufbereitung von Styrol-Acrylnitril, umfassend folgende Schritte:
- Bereitstellen einer Aufbereitungsanlage (1) mit einer Entwässerungsschneckenmaschine (2) und mindestens einer Aufbereitungsschneckenmaschine (4, 4'),
- Zuführen von nassem Kautschuk (6) mit einem ersten Wassergehalt W₁ in die Entwässerungsschneckenmaschine (2),
- Entwässern des nassen Kautschuks (6) mittels der Entwässerungsschneckenmaschine (2) zu einem entwässerten Kautschuk (7) mit einem zweiten Wassergehalt W₂, wobei W₂ < W₁ ist,
- Austragen des entwässerten Kautschuks (7) aus der Entwässerungsschneckenmaschine (2),
- Zuführen des entwässerten Kautschuks (7) und von Styrol-Acrylnitril (78, 121) in die mindestens eine Aufbereitungsschneckenmaschine (4, 4'),
- Erzeugen einer Mischung aus dem entwässerten Kautschuk (7) und dem Styrol-Acrylnitril (78, 121) mittels der mindestens einen Aufbereitungsschneckenmaschine (4, 4'), und
- Entgasen der erzeugten Mischung (86) mittels der mindestens einen Aufbereitungsschneckenmaschine (4, 4').

2. Verfahren nach Anspruch 1, **dadurch gekennzeichnet,**
**dass** der erste Wassergehalt W₁ mindestens 20 Gew.-%, insbesondere mindestens 30 Gew.-%, insbesondere mindestens 40 Gew.-%, und insbesondere mindestens 50 Gew.-% beträgt.

3. Verfahren nach Anspruch 1 oder 2, **dadurch gekennzeichnet,**
**dass** der zweite Wassergehalt W₂ höchstens 20 Gew.-%, insbesondere höchstens 16 Gew.-%, insbesondere höchstens 11 Gew.-%, insbesondere höchstens 10 Gew.-%, und insbesondere höchstens 8 Gew.-% beträgt.

4. Verfahren nach mindestens einem der vorangehenden Ansprüche,
**dadurch gekennzeichnet,**
**dass** der entwässerte Kautschuk (7) beim Zuführen in die mindestens eine Aufbereitungsschneckenmaschine (4, 4') eine Temperatur T_{K} hat, wobei gilt: 60°C ≤ T_{K} ≤ 140°C, insbesondere 70°C ≤ T_{K} ≤ 130°C, insbesondere 85°C ≤ T_{K} ≤ 120°C, und insbesondere 100°C ≤ T_{K} ≤ 110°C.

5. Verfahren nach mindestens einem der vorangehenden Ansprüche,
**dadurch gekennzeichnet,**
**dass** der entwässerte Kautschuk (7) in einer Förderrichtung (11) stromaufwärts zu dem Styrol-Acrylnitril (78, 121) in die mindestens eine Aufbereitungsschneckenmaschine (4, 4') zugeführt wird.

6. Verfahren nach mindestens einem der vorangehenden Ansprüche,
**dadurch gekennzeichnet,**
**dass** das Styrol-Acrylnitril (121) als Schüttgut in die mindestens eine Aufbereitungsschneckenmaschine (4, 4') zugeführt und mittels der mindestens einen Aufbereitungsschneckenmaschine (4, 4') zu einer Styrol-Acrylnitril-Schmelze aufgeschmolzen wird, und/oder
**dass** das Styrol-Acrylnitril (78) als Styrol-Acrylnitril-Schmelze in die mindestens eine Aufbereitungsschneckenmaschine (4, 4') zugeführt wird.

7. Verfahren nach mindestens einem der vorangehenden Ansprüche,
**dadurch gekennzeichnet,**
**dass** zwischen einer ersten Zuführstelle des entwässerten Kautschuks (7) und einer zweiten Zuführstelle des Styrol-Acrylnitrils (78, 121) eine Dichtung (79) in der mindestens einen Aufbereitungsschneckenmaschine (4, 4') ausgebildet ist.

8. Aufbereitungsanlage zur Aufbereitung von Styrol-Acrylnitril, umfassend:
mindestens eine Aufbereitungsschneckenmaschine (4, 4') zum Aufbereiten von entwässertem Kautschuk (7) und von Styrol-Acrylnitril (78, 121),
**gekennzeichnet**
**durch** eine Entwässerungsschneckenmaschine (2) zum Entwässern von nassem Kautschuk (6) und zum Bereitstellen des entwässerten Kautschuks (7), und
**durch** eine Zuführeinrichtung (3) zum Zuführen des entwässerten Kautschuks (7) in die mindestens eine Aufbereitungsschneckenmaschine (4, 4').

9. Aufbereitungsanlage nach Anspruch 8, **dadurch gekennzeichnet, dass** die Entwässerungsschneckenmaschine (2) mindestens eine Entwässerungswelle (22, 23) umfasst, die eine Länge L_{E} und einen Außendurchmesser D_{E} hat, wobei gilt: 16 ≤ L_{E}/D_{E} ≤ 40, insbesondere 18 ≤ L_{E}/D_{E} ≤ 34, und insbesondere 20 ≤ L_{E}/D_{E} ≤ 28.

10. Aufbereitungsanlage nach Anspruch 8 oder 9, **dadurch gekennzeichnet,**
**dass** die Entwässerungsschneckenmaschine (2) mindestens eine Entwässerungswelle (22, 23) umfasst, die einen Außendurchmesser D_{E} und einen Innendurchmesser d_{E} hat, wobei gilt: 1,22 ≤ D_{E}/d_{E} ≤ 1,8, insbesondere 1,4 ≤ D_{E}/d_{E} ≤ 1,66, und insbesondere 1,5 ≤ D_{E}/d_{E} ≤ 1,6.

11. Aufbereitungsanlage nach mindestens einem der Ansprüche 8 bis 10, **dadurch gekennzeichnet,**
**dass** die Entwässerungsschneckenmaschine (2) mindestens eine Entwässerungszone (30, 31) umfasst.

12. Aufbereitungsanlage nach mindestens einem der Ansprüche 8 bis 11, **dadurch gekennzeichnet,**
**dass** die Zuführeinrichtung (3) mindestens eine Zuführrohrleitung (43) und/oder mindestens einen Zuführtrichter (109) und/oder einen Pufferbehälter (103) und/oder mindestens einen Dosierer (104, 105) und/oder mindestens eine Zuführschneckenmaschine (106) umfasst.

13. Aufbereitungsanlage nach mindestens einem der Ansprüche 8 bis 12, **dadurch gekennzeichnet,**
**dass** die mindestens eine Aufbereitungsschneckenmaschine (4, 4') jeweils mindestens zwei Behandlungselementwellen (47, 48) umfasst, die eine Länge L_{A} und einen Außendurchmesser D_{A} haben, wobei gilt: 20 ≤ L_{A}/D_{A} ≤ 60, insbesondere 28 ≤ L_{A}/D_{A} ≤ 52, und insbesondere 36 ≤ L_{A}/D_{A} ≤ 40.

14. Aufbereitungsanlage nach mindestens einem der Ansprüche 8 bis 13, **dadurch gekennzeichnet,**
**dass** die mindestens eine Aufbereitungsschneckenmaschine (4, 4') jeweils mindestens zwei Behandlungselementwellen (47, 48) umfasst, die einen Außendurchmesser D_{A} und einen Innendurchmesser d_{A} haben, wobei gilt: 1,22 ≤ D_{A}/d_{A} ≤ 1,8, insbesondere 1,4 ≤ D_{A}/d_{A} ≤ 1,66, und insbesondere 1,5 ≤ D_{A}/d_{A} ≤ 1,6.

15. Aufbereitungsanlage nach mindestens einem der Ansprüche 8 bis 14, **dadurch gekennzeichnet,**
**dass** die mindestens eine Aufbereitungsschneckenmaschine (4, 4') jeweils eine erste Zuführöffnung (73) zum Zuführen des entwässerten Kautschuks (7) und jeweils eine zweite Zuführöffnung (81) zum Zuführen des Styrol-Acrylnitrils (78, 121) umfasst, wobei die erste Zuführöffnung (73) in einer Förderrichtung (63) stromaufwärts zu der zweiten Zuführöffnung (81) angeordnet ist.

16. Aufbereitungsanlage nach Anspruch 15, **dadurch gekennzeichnet, dass** die mindestens eine Aufbereitungsschneckenmaschine (4, 4') zur Ausbildung einer Dichtung (79) mindestens eine jeweilige Stauzone (68) umfasst, die zwischen der ersten Zuführöffnung (73) und der zweiten Zuführöffnung (81) angeordnet ist.

17. Aufbereitungsanlage nach Anspruch 15 oder 16, **dadurch gekennzeichnet,**
**dass** die mindestens eine Aufbereitungsschneckenmaschine (4, 4') jeweils mindestens eine erste Entgasungszone (67) umfasst, die zwischen der ersten Zuführöffnung (73) und der zweiten Zuführöffnung (81) angeordnet ist.

18. Aufbereitungsanlage nach mindestens einem der Ansprüche 15 bis 17, **dadurch gekennzeichnet,**
**dass** die mindestens eine Aufbereitungsschneckenmaschine (4, 4') jeweils mindestens eine zweite Entgasungszone (71) umfasst, die in der Förderrichtung (63) stromabwärts zu der zweiten Zuführöffnung (81) angeordnet ist.
